# EUROPEAN PATENT APPLICATION

(11) **EP 4 832 436 A1**
(43) Date of publication of application: **28.10.2026**
(21) Application number: 26174042.7
(22) Date of filing: 22.04.2026
(51) Int. Cl.: H04L 41/0806, H04L 41/0873, H04L 41/22, H04L 41/0853, H04L 41/0894

(54) **SYSTEMS AND METHODS FOR GOVERNING AND PROVISIONING NETWORKED SYSTEM COMPONENTS BASED ON BOTH PHYSICAL AND LOGICAL PROPERTIES THROUGH UNIFIED RULE STRUCTURES**

(30) Priority: 24.04.2025 US 202519189214
(71) Applicant: The Bank of New York Mellon, New York, NY 10286 (US)
(72) Inventor: Oren, Marc, New York (US); Pandya, Vikas, New York (US); Mundo Castro, Esteban, New York (US); Patel, Yogen, New York (US)
(74) Representative: Schulte, Drew Joseph

(57) **Abstract**

Systems and methods for governing and provisioning networked system components based on both physical and logical properties through unified rule structures. For example, the system may receive a first unified rule structure, wherein the first unified rule structure comprises a first modular rule set for a required physical rule and a required logical rule for an architecture of networked system components in a network system. The system may retrieve a first networked system model, wherein the first networked system model comprises a metamodel graph connecting the networked system components, wherein the first networked system model uses metamodel data indicating respective physical and logical endpoints for the networked system components to generate the first networked system model, and wherein the metamodel data is retrieved from respective unified modular profiles for each of the networked system components. The system may validate the first networked system model based on a first unified rule structure.

## Description

### BACKGROUND

**In** high-level architecture design of application governance and provisioning systems, matching endpoints to application components is difficult due to the inherent complexity of coordinating dynamic infrastructure with application logic. Application governance involves overseeing the lifecycle of applications-such as starting, stopping, scaling, or updating them-while provisioning focuses on allocating and configuring the underlying resources those applications need. Each of these domains may operate independently, often with separate data models, timelines, and control mechanisms. This separation can result in mismatches between what the application expects and what the provisioning layer delivers. For example, a component may be managed as part of an application deployment plan, but the actual network endpoint the component it requires might not yet be provisioned or might change due to autoscaling or infrastructure updates. Additionally, the provisioning layer may dynamically assign IP addresses, ports, or URLs, which need to be correctly and securely matched to the logical application components managed elsewhere. Coordinating these mappings in real time, across multiple environments and possibly multiple clouds, requires sophisticated service discovery, synchronization, and configuration governance. This becomes even more complicated when factoring in multi-tenancy, versioning, access controls, and environment-specific customizations-all of which must be reconciled to ensure that each component is correctly and securely connected to its intended endpoint.

Moreover, determining a standardized taxonomy in an application management and provisioning system is difficult due to the vast diversity of applications, infrastructures, protocols, and organizational practices. system components can vary widely in form-ranging from web components, application components, messaging components, database components, and more -The design of each of these components has its own syntax, semantics, and operational context. Components express themselves through endpoints. Moreover, different teams or platforms may define and interpret components and their endpoint roles differently, such as "public," "internal," "admin," or "healthcheck" endpoints, depending on usage patterns and security requirements. The taxonomy must also account for different lifecycle states (e.g., provisioned, active, deprecated), environments (e.g., dev, staging, prod), and scopes (e.g., per-service, per-tenant, per-region), which adds layers of complexity. Additionally, evolving technologies and architectures-like microservices, serverless, and edge computing-introduce new kinds of components, endpoints and communication patterns that do not always fit neatly into predefined categories. Attempting to enforce a one-size-fits-all taxonomy often leads to inflexibility or misalignment with real-world deployments. As a result, creating a standardized, yet extensible, taxonomy that can adapt to this breadth of use cases and still support automation, validation, and governance across the system is a significant challenge.

### SUMMARY

Systems and methods are described herein for novel uses and/or improvements to network governance and/or provisioning. As one example, systems and methods are described herein for an architecture design and insight tool that manages and provisions networked system components based on both the physical and logical properties of those components through unified rule structures. For example, the process of determining endpoints differs significantly between application governance and application provisioning because each of these focus on distinct aspects of the application lifecycle and requires different types of data. In application provisioning, the emphasis is on preparing the infrastructure and resources necessary for the application to run. This involves allocating compute resources, storage, networking, and assigning or generating endpoints such as IP addresses, ports, or domain names. The provisioning system needs data about infrastructure topology, network configurations, security policies, and service discovery mechanisms to determine how and where endpoints will be created. In contrast, application governance focuses on orchestrating and maintaining the operational behavior of the application itself-starting, stopping, scaling, updating components, and governing their dependencies. It requires contextual data about the application's architecture, component relationships, endpoint roles (e.g., frontend vs. backend), traffic routing, and desired state configurations. While provisioning is concerned with the mechanics of endpoint creation, application governance is focused on the logic-how those endpoints should be used, exposed, and monitored. Because the two processes draw from different data sources and operate at different layers of abstraction, aligning them to ensure the correct endpoints are both created and appropriately assigned adds to the complexity of governing modern applications.

Data models, such as flat relational databases or hierarchical configurations (like JSON or YAML files), cannot represent and manage the interplay between physical and logical relationships because they lack the inherent flexibility and connectivity of graph structures. In relational models, relationships must be explicitly joined through foreign keys, which can become complex and computationally expensive when querying deeply nested or many-to-many relationships-common in modern application architectures. These models also cannot capture the dynamic, interconnected nature of infrastructure and application logic, especially when components are constantly changing due to scaling, deployments, or configuration updates. Hierarchical data models, while easier to read and serialize for static configurations, rigidly couple structure and logic, making it difficult to represent cross-cutting concerns or multi-dimensional relationships without duplicating data or introducing ambiguity.

**To** overcome these technical limitations, the systems and methods described herein use an architecture that defines both physical and logical relationships by encoding them into a unified but flexible rule-based system using a flexible metamodel. The flexible metamodel captures the structure and meaning of components and their interactions. In this approach, physical relationships-such as physical connections between services, assigned IPs, network paths, or dependencies-are represented to reflect how components are technically wired together. Simultaneously, logical relationships-such as roles (e.g., frontend, backend), responsibilities (e.g., authentication service, logging service), or logical groupings (e.g., environment, tenant, application tier)-are also encoded as metadata or labeled relationships. This dual representation allows the system to enforce and validate architecture rules that consider both infrastructure-level mechanics and application-level intent.

By using a metamodel, the system gains the flexibility to traverse and query physical and logical relationships independently or in combination, enabling better monitoring, visualization, and governance. For example, one can trace all backend services (a logical concept) that depend on a particular subnet (a physical detail) or detect when a component is physically connected to others in a way that violates its intended logical role. This layered view not only supports richer automation and validation but also helps identify misconfigurations, inconsistencies, or drift across different stages of the application lifecycle. For example, metamodels naturally represent nodes (components) and edges (relationships) in a way that mirrors real-world architectural complexity, allowing for efficient traversal, flexible rule expression, and independent monitoring of physical and logical dimensions. This makes graph-based representations far more efficient and adaptable for systems that require rich context-awareness, real-time validation, and the ability to evolve alongside changing application and infrastructure designs.

However, even with the use of this data, the system still needs to enforce architecture and design rules both in conjunction and/or individually with respect to the mechanical and semantic properties of those components. The system achieves this through unified rule structures of data. For example, architecture rules and design rules can be combined to represent both mechanical and semantic relationships by structuring them in a rule set that defines constraints, patterns, and validations applicable to a metamodel of the system. In this context, architecture rules focus on various control aspects the organization chooses to implement, such as resiliency, security, operability. Together, these rules can be structured as a unified set of declarative constraints or assertions that apply to logical components, physical components and endpoints in the metamodel. Each rule can specify the type of relationship it applies to (physical, logical, and/or both), the attributes it expects (e.g., labels, tags, capacity), and the conditions that must be met (e.g., "all interactions must be encrypted"). In a data array or rule set, each rule can be expressed as an object or entry containing a rule ID, target node or edge types, conditions, scope (logical, physical, and/or hybrid), and actions or alerts triggered when the rule is violated. This modular structure allows the rules to be applied either independently-monitoring just logical dependencies or just physical consistency-or in conjunction, where both layers are validated together for more complex architectural compliance. By leveraging the metamodel's inherent flexibility and traversal capabilities, the system can efficiently enforce, visualize, and evolve these rules alongside changes in the application's structure and intent.

In some aspects, systems and methods for governing and provisioning networked system components based on both physical and logical properties through unified rule structures are described. For example, the system may receive a first unified rule structure, wherein the first unified rule structure comprises a first modular rule set for a required physical rule and a required logical rule for an architecture of networked system components in a network system. The system may retrieve a first networked system model, wherein the first networked system model comprises a metamodel graph connecting the networked system components, wherein the first networked system model uses metamodel data indicating respective physical and logical endpoints for the networked system components to generate the first networked system model, and wherein the metamodel data is retrieved from respective unified modular profiles for each of the networked system components. The system may validate the first networked system model based on a first unified rule structure. The system may, in response to validating the first networked system model, generate for display, in a user interface, a first graphical representation of the first networked system model.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

**FIGS.** 1A-1C show an illustrative diagram for a user interface of an architecture design tool, in accordance with one or more embodiments.
**FIG.** 2 shows an illustrative diagram for a unified rule structure and/or unified modular profile, in accordance with one or more embodiments.
**FIG.** 3 show an illustrative system used to manage and provision networked system components, in accordance with one or more embodiments.
FIG. 4 shows illustrative components for a system used to generate metamodel data, in accordance with one or more embodiments.
FIG. 5 shows a flowchart of the steps involved in governing and provisioning networked system components, in accordance with one or more embodiments, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

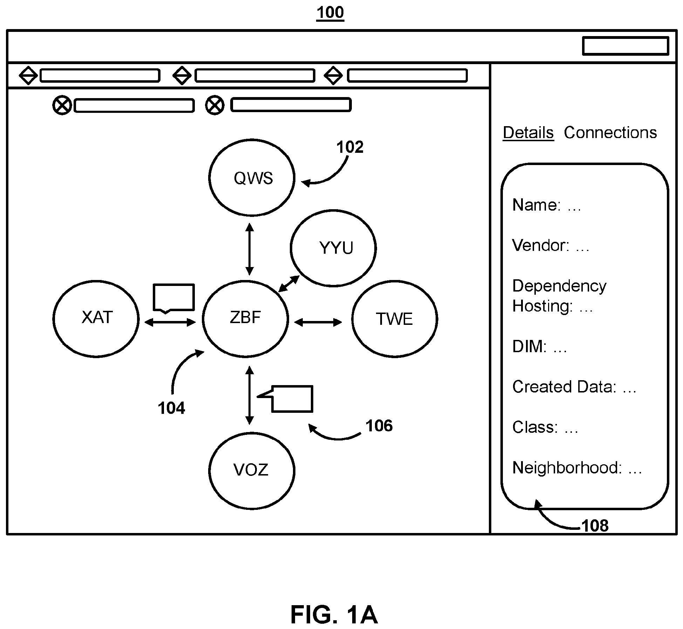

FIGS. 1A-C shows an illustrative diagram for a user interface of an architecture design tool, in accordance with one or more embodiments. FIG. 1A shows an illustrative diagram for a graphical representation of a networked system model, in accordance with one or more embodiments. For example, user interface 100 shows a networked system model that includes a metamodel graph connecting component 102 and component 104. For example, the networked system model may use metamodel data indicating respective physical and logical endpoints for the networked system components (e.g., component 102 and component 104) to generate the networked system model.

**As** described herein, a user interface such as user interface 100 may be a visual and interactive layer through which users engage with a software system. In the context of an architecture design tool for application governance and provisioning, the user interface serves as a critical bridge between human operators and the complex underlying systems. It provides a visual representation of the application architecture-such as components, relationships, environments, and endpoints-often using diagrams, graphs, or dashboards that help users understand and manipulate the system intuitively. For application governance, the user interface enables users to perform actions like deploying services, scaling instances, monitoring component health, or updating configurations, often through drag-and-drop interfaces or control panels. For provisioning, the user interface allows users to allocate resources, define infrastructure templates, and manage network configurations, often abstracting low-level details to reduce complexity. Additionally, in architecture design, the user interface can be used to define or apply rules, visualize compliance violations, simulate changes, and explore the system at both physical and logical levels. By offering real-time feedback, context-aware suggestions, and error-checking, the user interface plays a vital role in ensuring that architecture decisions are accurate, consistent, and aligned with organizational goals.

**As** described herein, a networked system model may be a representation of the structure and behavior of a system's communication pathways, typically outlining how components, services, and resources connect and interact across physical or virtual networks. In an architecture design tool used for application governance and provisioning, the networked system model may play a foundational role by defining the topology of the application's infrastructure-such as which services can communicate, how data flows between them, and what security boundaries exist. For application provisioning, the networked system model informs how resources like IP addresses, load balancers, and firewalls are allocated and configured, ensuring that components are correctly wired together during deployment. In application governance, it provides the context for understanding changes to the current state of the system (e.g., connectivity, enforcing access policies, and validating changes to service relationships). The networked system model is also used to simulate or predict the impact of architectural changes, helping users understand how updates might affect availability, latency, or security. When integrated with a visual interface, the networked system model allows architects and operators to design, inspect, and validate network layouts and their compliance with rules or constraints, supporting both low-level configuration and high-level decision-making.

As described herein, a metamodel graph may be a structured representation of information where entities (nodes) and their relationships (edges) are captured in a graph format, enriched with logical context and meaning. For example, a relationship between components may be described by details (e.g., detail 106) linked to an edge. In the context of a network system for application governance and provisioning, a metamodel graph is used to model components, services, configurations, and their interconnections, enabling intelligent querying, validation, and reasoning about the architecture. The data used to create the metamodel graph typically comes from a combination of sources, such as infrastructure-as-code templates, configuration files, service registries, monitoring tools, and metadata stored in a unified modular profile. This modular profile aggregates physical data (e.g., IP addresses, ports, authentication/authorization certificates, resource identifiers) and logical data (e.g., component roles, ownership, service tiers, host quantity, CPU, memory) for each component.

To determine how to connect components like component 102 and component 104, the metamodel graph uses both types of data. Physically, it checks compatibility and dependency patterns-such as whether the port ranges align, if there's a service link defined, or if network policies permit communication. Logically, it evaluates whether the components are intended to interact based on their roles or logical groupings-for example, whether a frontend is expected to talk to a backend, or if both belong to the same application domain or environment. By querying the graph, the system can infer valid connections, highlight misconfigurations, or even auto-generate missing links when appropriate. This makes the metamodel graph a powerful tool for governing complexity in modern, distributed systems, as it unifies data, context, and intent into a coherent and navigable model.

As described herein, networked system components in a network system may be the essential building blocks that enable connectivity, communication, and data exchange between various application elements. These components include routers, switches, firewalls, load balancers, gateways, virtual private networks (VPNs), subnets, and network interfaces, as well as software-defined networking (SDN) elements like virtual networks and service meshes. In the context of application governance and provisioning within an architecture design tool, these networked system components are both visually represented and logically defined to help users design and control the application's connectivity and security posture. The architecture design tool typically displays these components through interactive diagrams or topology views, where each element is depicted as a node with identifiable attributes such as IP ranges, protocols, access policies, or performance metrics. Behind the scenes, the tool defines each component using metadata and configuration parameters-often retrieved from infrastructure-as-code definitions, cloud provider application programming interfaces ("APIs"), or orchestration systems. This allows users to simulate, validate, and provision network configurations, ensuring that application components are correctly connected, segmented, and secured according to design and compliance requirements. For application governance, these components provide the context needed for tasks like traffic routing, fault isolation, monitoring, and scaling. By integrating networked system components into both the visual interface and the underlying model, the architecture design tool helps bridge infrastructure and application logic, ensuring robust and reliable deployments.

Additionally, the network system and its supporting architecture design tool may include a wide range of other networked system components that represent different layers of the application and infrastructure stack. Examples include compute components like virtual machines, containers, and serverless functions that run the application logic; storage components such as databases, data lakes, and file systems that store persistent data; and application services like APIs, microservices, and web frontends that deliver functionality to users. There are also infrastructure components like load balancers, DNS resolvers, and content delivery networks (CDNs) that support scalability and availability. Security components, such as identity providers, authentication services, encryption modules, and policy engines, help enforce access control and data protection. Monitoring and observability components-including logging agents, metrics collectors, and dashboards-are used for tracking performance and health. In architecture design tools, these components are typically modeled as individual nodes with specific attributes and relationships to other parts of the system, allowing designers to visually and logically understand how the full application environment is composed. Each component may be tagged with metadata describing its role, configuration, environment (e.g., development or production), and its physical and logical properties, all of which support automation, governance, and intelligent provisioning.

In some embodiments, the metamodel data may be retrieved from respective unified modular profiles for each of the networked system components (e.g., component 108). As described herein, metamodel data for a metamodel graph may refer to a structured set of entities (nodes) and the relationships (edges) that connect them, typically enriched with metadata and logical labels. This data forms the foundation of a metamodel graph, enabling it to represent complex systems like application architectures or network environments in a way that captures both structure and meaning. In a metamodel graph used for application governance and provisioning, metamodel data is used to represent components such as services, databases, network elements, and their interconnections-defining not just who connects to whom, but also why and how, based on their roles, configurations, and dependencies. To generate the metamodel graph, this metamodel data is extracted from unified modular profiles, which are structured profiles that encapsulate both physical properties (e.g., IP addresses, protocols, ports) and logical attributes (e.g., component roles, service tiers, lifecycle stages) of each networked system component.

For example, if component 108 has a unified modular profile that describes it as a backend database with a specific endpoint and security group, this profile can be parsed to produce a node in the metamodel graph representing component 108, with edges connecting it to other components it serves or depends on. The metamodel data is typically retrieved through automated extraction pipelines or APIs that read these modular profiles, normalize the data into a graph-compatible format (e.g., RDF, property graphs), and insert it into the metamodel database or engine. As each profile is processed, its connections, roles, and constraints are translated into graph nodes and edges, enabling the system to reason about application topology, enforce rules, validate configurations, and support visual or programmatic exploration. This approach allows the metamodel graph to be dynamically built and maintained based on the authoritative source data held in the modular profiles, ensuring both accuracy and adaptability in governing complex systems.

In some embodiments, the system may be used for modeling, validating, scoring, and provisioning application architectures using structured component metadata and configurable evaluation criteria. For example, the system may generate a graphical representation of an application's architecture by aggregating declared properties from its components, such as communication protocols, operational configurations, design patterns, compliance attributes, and other domain-specific metadata. The system may then validate the architecture against modular rule sets that represent enterprise standards, design principles, operational policies, or other definable requirements. The system may use a scoring engine that evaluates compliance across one or more dimensions, and the system generates recommendations for improvement based on rule deviations and score trends. The system may use architecture models and evaluation results that are made available via a visual user interface and through programmatic access. The system may also support integration with provisioning tools, enabling the automated deployment of infrastructure based on validated designs. The system may generate a backend graph model enables efficient discovery, analysis, and reasoning over architectural relationships and properties.

For example, the system that employs an architecture combining both physical and logical relationships within a unified, rule-based framework can achieve powerful modeling, validation, and provisioning capabilities by leveraging a flexible metamodel. This metamodel encapsulates the structure and semantics of architectural components and their interactions, serving as a foundation for capturing both infrastructure-level configurations and high-level design intent. Physical relationships-such as service connections, IP assignments, network paths, and hardware dependencies-are modeled to reflect the actual topology and technical wiring of the system. At the same time, logical relationships-such as assigned roles, responsibilities, groupings by environment or function, and other conceptual categorizations-are encoded as metadata or labeled links. This dual-layer representation allows the system to validate and enforce architectural rules that span both operational mechanics and design principles.

Building on this model, the system supports a rich suite of capabilities for modeling, validating, scoring, and provisioning application architectures. By aggregating structured metadata from components-such as communication protocols, runtime configurations, compliance flags, and design pattern declarations-the system can generate comprehensive graphical representations of an application's architecture. Modular, configurable rule sets can then be applied to assess the design against enterprise standards, best practices, and operational policies. A built-in scoring engine evaluates compliance across multiple dimensions-such as security, performance, maintainability, and cost efficiency-and highlights rule violations or trends over time. Based on these evaluations, the system can generate actionable recommendations for improving architectural alignment and quality.

To support transparency and collaboration, architectural models and evaluation results are exposed via an interactive visual interface as well as through APIs for programmatic access. This makes it easier for architects, developers, and operations teams to explore, analyze, and act on architectural insights. Moreover, integration with provisioning tools allows the system to automate infrastructure deployment based on validated, rule-compliant designs. Underpinning all of these capabilities is a backend graph model, which provides an efficient and expressive foundation for querying, reasoning about, and managing the complex relationships and attributes inherent in modern application architectures.

For example, the scoring engine may rely on the metamodel as its foundational framework for interpreting, evaluating, and reasoning about architectural components and their relationships. Since the metamodel defines the structure, semantics, and allowable properties of components and interactions, it provides the schema against which the scoring engine can consistently assess compliance and quality. Each architectural element-whether a service, connection, policy, or role-is described through structured metadata defined by the metamodel, enabling the scoring engine to apply evaluation criteria in a standardized and context-aware manner. For example, if the metamodel specifies that a certain type of service must use encrypted communication protocols or conform to a specific availability pattern, the scoring engine can traverse the model to verify whether these expectations are met.

Furthermore, the metamodel supports the classification of components along multiple dimensions-such as layer (e.g., frontend, backend), domain (e.g., identity, data), or criticality (e.g., business-critical, internal tooling)-which allows the scoring engine to apply differentiated rule sets and scoring weights. This makes it possible to score architectures not just generically, but according to their specific purpose and risk profile. Because the metamodel encodes both logical and physical relationships, the scoring engine can also evaluate broader architectural concerns, such as separation of concerns, fault isolation, redundancy, or policy alignment. Ultimately, the metamodel enables the scoring engine to perform rule-based reasoning with a high degree of flexibility and precision, ensuring that scores reflect meaningful assessments of architectural fitness and compliance.

For example, the system may use a first unified rule structure to seamlessly integrate both physical and logical evaluation criteria into a coherent framework for modeling, validating, scoring, and provisioning application architectures. This first unified rule structure combines a first modular rule set for a required physical rule-such as verifying that all backend services are hosted within a specified subnet or that data flows are encrypted between zones-with a required logical rule-such as ensuring that all authentication services are properly segregated from user-facing components or that services fulfilling specific roles follow prescribed design patterns. These modular rules are defined within the context of the system's metamodel, allowing them to be applied dynamically based on the structured metadata associated with each component and its relationships.

By using this unified rule structure, the system can perform holistic validation that considers both the technical implementation and the architectural intent. During modeling, the rule structure guides the definition and configuration of components to ensure alignment with enterprise standards. During validation, the system evaluates whether both physical deployment details and logical roles comply with required rules. This evaluation feeds into the scoring engine, which aggregates compliance outcomes across dimensions such as security, performance, and design integrity. The results inform stakeholders of architecture quality and readiness. Furthermore, once an architecture is validated against these unified rules, the system can automate provisioning workflows by translating compliant designs into deployment templates or configuration scripts, ensuring that what is deployed matches what was validated. This end-to-end consistency, grounded in a unified rule structure, enhances governance, reduces deployment risk, and promotes repeatability in architecture design and implementation.

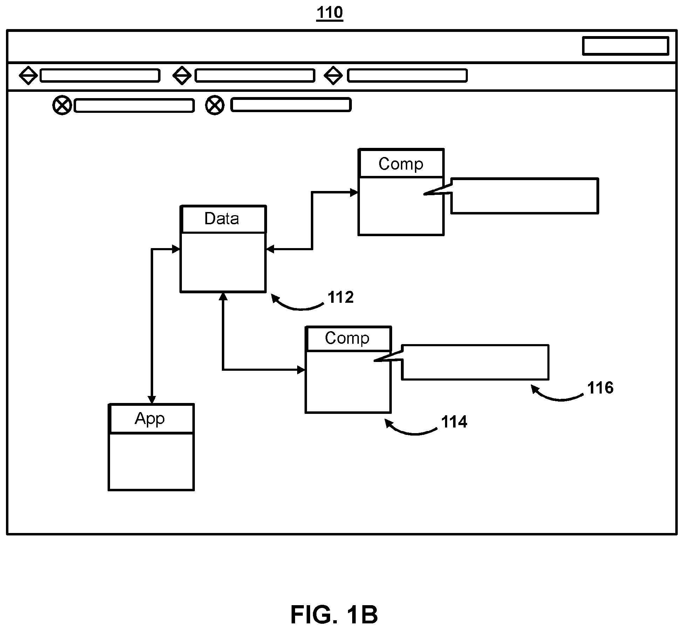

FIG. 1B shows an illustrative diagram for a graphical representation of dependencies between components in a networked system model, in accordance with one or more embodiments. For example, user interface 110 may show the dependencies (e.g., based on data inputs and/or outputs) between different components of a network system. For example, user interface 110 shows component 112 (which may be a data component) that has a dependency with component 114 (which may be a compute component). User interface 110 may further describe this via details (e.g., detail 116).

For example, user interface 110 may show dependencies between components by visually representing the connections and relationships that exist based on how data flows or services interact within a network system. These dependencies may be illustrated through diagrams, such as node-link graphs or topology maps, where each component-like component 112 (a data component) and component 114 (a compute component)-is displayed as a node, and the connections between them are drawn as directional lines or arrows. These visual cues indicate the nature of the dependency, such as data flowing from a storage system to a compute engine for processing. User interface 110 may allow users to click or hover over these connections to view contextual metadata or supporting information, such as the type of data exchanged, the communication protocol used, or the latency or security settings involved. Additional descriptive elements, like detail 116, provide deeper insights into the dependency, offering structured information in a sidebar or popup-such as the source and destination endpoints, dependency type (e.g., synchronous API call, batch data pull), or versioning and configuration attributes. This layered representation enables users to understand both high-level architecture and low-level interactions, supporting better troubleshooting, validation, and optimization of system behavior.

The system may generate, for display in a user interface such as user interface 110, a first graphical representation of the first networked system model by processing structured metamodel data that defines the components and their relationships within the network system. This begins with retrieving information from unified sources such as modular profiles, configuration files, or infrastructure state APIs, which describe each component's physical properties (e.g., IP addresses, endpoints, protocols) and logical attributes (e.g., roles, dependencies, and environment). The system translates this data into a graph structure composed of nodes and edges, where nodes represent individual components-such as compute instances, data stores, or network interfaces-and edges represent their interactions or dependencies. Once this graph is constructed, a rendering engine transforms it into a visual layout optimized for clarity and usability, which is then displayed in the user interface.

The characteristics of this graphical representation may include labeled nodes with icons or shapes that signify the type or function of each component (e.g., database, API, frontend), directional edges that indicate the flow of communication or data, and visual cues such as color-coding, grouping, or layering to represent status, environment (e.g., dev, prod), or logical domains. The user interface may also support interactivity, allowing users to zoom, filter, hover for tooltips, or click for detailed metadata views. In user interface 110, this visual model helps users understand the topology of the system, identify critical dependencies, and perform governance or provisioning tasks more intuitively, all while aligning physical structure with architectural intent.

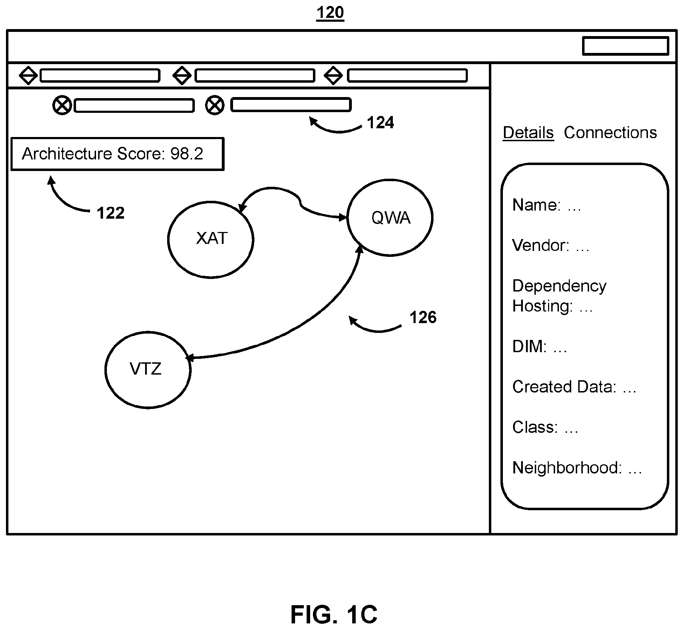

**FIG.** 1C shows an illustrative diagram for a graphical representation of arrangements between components in a networked system model, in accordance with one or more embodiments. In some embodiments, user interface 120 may show validations and/or recommendations for different networked system models and/or variations thereof). For example, the system may validate architecture designs based on unified rule structures and/or unified structure criterion (e.g., as defined by options 124) as well as generate recommendations and modifications to one or more networked system models and/or components thereof.

The user interface, such as user interface 120, may show validations and recommendations for different networked system models and their variations by integrating real-time feedback mechanisms that evaluate architecture designs against a set of unified rule structures and structural criteria. These rules and criteria-defined by inputs such as options 124-may include best practices, organizational policies, compliance requirements, or performance guidelines, and are applied automatically as users design or modify the networked system model. When the system detects a violation of these rules, the user interface highlights the affected components or connections within the graphical representation, often using visual cues such as warning icons, red outlines, or tooltips explaining the issue. For example, if a compute component is directly connected to an external-facing endpoint without a firewall, the system might flag this as a violation of a security policy.

Alongside validations, the user interface also provides recommendations or suggested modifications, which may be presented in a dedicated sidebar, dropdown panel, or inline pop-up. These recommendations can include alternative configurations, optimized component placements, or missing dependencies that should be addressed-for instance, suggesting that a load balancer be inserted between two services or recommending an encryption layer for data in transit. The system may also simulate variations of the networked system model, allowing users to preview changes and assess their impact before committing them. By embedding validations and recommendations directly within the design environment, user interface 120 helps guide users toward compliant, efficient, and robust architectures, reducing manual errors and accelerating the design-to-deployment process.

**The** system may recommend modifications to networked system models, such as networked system model 126, by analyzing the current state of the model against a defined set of architectural rules, best practices, and performance or security criteria. These rules may be derived from industry standards, organizational policies, or dynamically generated intelligence based on historical data, usage patterns, or simulated outcomes. The system first parses the networked system model's graph structure-including all components, connections, configurations, and metadata-and then applies rule-based and logic-driven evaluations to identify suboptimal patterns, potential risks, or compliance violations. Once discrepancies or inefficiencies are detected, the system generates context-aware recommendations to improve the model. These recommendations might suggest reconfiguring a component, rerouting data flows, inserting missing infrastructure elements (such as firewalls or load balancers), or updating endpoint definitions to align with logical roles.

Each recommendation is typically linked to a specific rationale, such as improving latency, enhancing security, meeting policy requirements, or ensuring architectural consistency. The system may present these suggestions directly in the user interface alongside the visual representation of the model-often with the option to preview the impact of a proposed change or automatically apply it. For example, if a database component lacks redundancy, the system might recommend replicating it across availability zones. If two components communicate insecurely across zones, it may suggest adding a secure gateway or encryption layer. By continuously comparing networked system model 126 to a combination of unified rule structures, past configurations, and system goals, the system provides intelligent, proactive guidance that enhances the design, reliability, and maintainability of the overall architecture.

**In** some embodiments, the system may determine architecture scores (e.g., architecture score 122). For example, the system may receive, via the user interface, a first unified structure criterion. The system may determine a first architecture score for the networked system components based on comparing the first networked system model to the first unified structure criterion. The system may receive a first modification one or more characteristics of the networked system components. The system may generate a second networked system model based on the first modification. The system may determine a second architecture score for the networked system components based on comparing the second networked system model to the first unified structure criterion. The system may determine a first recommendation based on the first architecture score and the second architecture score. The system may generate for display, in the user interface, the first recommendation.

For example, the system may determine architecture scores, such as architecture score 122, by evaluating how well a given networked system model aligns with one or more unified structure criteria-defined sets of architectural guidelines, performance objectives, or compliance requirements. The process begins when the system receives a first unified structure criterion through the user interface, which may include specifications related to scalability, security, redundancy, efficiency, or logical design consistency. The system then analyzes the first networked system model by comparing the structure, configuration, and relationships of its networked system components against this criterion. Based on the degree of alignment or deviation, the system calculates a first architecture score, quantifying the quality or fitness of the current design. If a user introduces a modification-such as changing a component's role, updating a connection, or altering a deployment configuration-the system generates a second, updated version of the networked system model that reflects this change. The system then reevaluates this new model against the same unified structure criterion, producing a second architecture score.

By comparing the first and second architecture scores, the system can assess the impact of the modification-whether it improves, degrades, or maintains the architectural integrity of the system. Using this comparison, the system determines a first recommendation that either supports the modification, suggests further refinements, or advises reverting the change. This recommendation may be based on score trends, thresholds, or specific violations and improvements detected between the two models. The system then generates this recommendation for display in the user interface, enabling the user to make informed decisions about design changes with real-time, data-backed guidance. This scoring and recommendation loop helps ensure that architectural decisions are continually aligned with defined goals, promoting iterative improvement and design optimization.

**In** some embodiments, the system may determine an architecture score by evaluating how well a given networked system model aligns with a set of predefined architecture criteria, often specified through a unified rule structure or structure criterion. To calculate the score, the system uses a range of metrics that reflect both technical compliance and architectural quality. These metrics may include the number and severity of rule violations (e.g., use of insecure protocols, missing required boundaries), the degree of logical consistency (e.g., correct role-based interactions), resource efficiency (e.g., over-provisioned or underutilized components), redundancy and fault tolerance, dependency complexity, and adherence to security and performance best practices. Each of these factors is assigned a weight or impact level, allowing the system to quantify the overall architectural health.

The architecture score may be expressed either as a numerical value (e.g., on a scale of 0-100) or as a grade or tier (e.g., A, B, C, or Bronze, Silver, Gold), providing an intuitive summary of the system's quality and compliance. Some systems also offer a breakdown of sub-scores by category (e.g., security: 85, scalability: 70, compliance: 95) to give more granular insights into specific strengths and weaknesses. This scoring mechanism helps users quickly assess the soundness of their architecture, compare design alternatives, and prioritize improvements, making it a powerful tool for iterative development, governance, and automated validation in application and network system design.

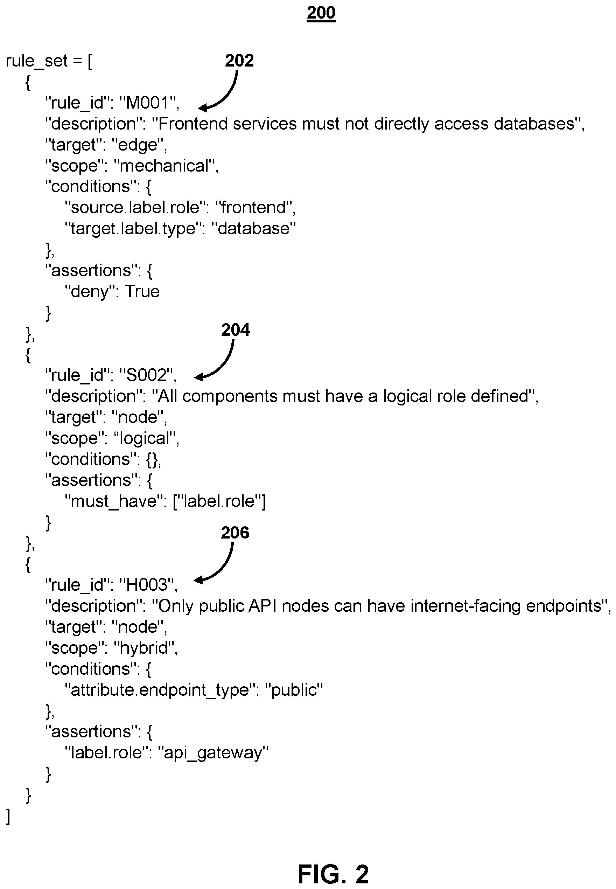

FIG. 2 shows an illustrative diagram for a unified rule structure and/or unified modular profile, in accordance with one or more embodiments. For example, a unified rule structure is a standardized framework that defines a set of architectural rules-both physical and logical-for evaluating, validating, and governing components within a network or application system. Physical rules focus on infrastructure-level constraints and configurations, such as connectivity, protocol compliance, network segmentation, or resource allocation. Logical rules, on the other hand, describe the intended roles, relationships, or functional responsibilities of components, such as service roles (e.g., frontend, backend), data flow logic, or access boundaries. A unified rule structure brings these two dimensions together into a cohesive format, allowing systems to reason about both the physical wiring of the architecture and the logical intent behind it. For example, a unified rule structure may state that a frontend component (logical role) must not directly communicate with a database (physical dependency) without passing through a designated API gateway.

This unified framework can be used to generate metamodel graphs by informing how components and their relationships are interpreted and represented-mapping physical connections and logical groupings into a coherent graph. Similarly, it can be applied to validate networked system models by checking whether a design meets both infrastructure requirements and architectural intent. The rule structure may be encoded in a machine-readable format, such as a schema or rule set, and applied programmatically as part of a design tool, deployment pipeline, or continuous validation engine. By bridging physical and logical concerns, a unified rule structure ensures architectural consistency, supports intelligent recommendations, and provides a foundation for automation, compliance, and optimization across the system lifecycle.

A unified modular profile may be a structured representation of a network or application component that encapsulates both its physical and logical characteristics in a modular and reusable format. Physical characteristics may include details such as IP addresses, ports, protocols, network interfaces, and resource configurations, while logical characteristics describe the component's intended role, behavior, ownership, functional domain, and relationships within the broader system-such as identifying a component as a "backend service," "data processor," or part of a specific application tier. By combining these two dimensions into a unified profile, the system gains a holistic view of each component that supports deeper analysis and intelligent operations. For example, a unified modular profile can be used to determine valid dependencies between components-such as ensuring a compute node is allowed to access a data store based on both network reachability (physical) and logical role alignment (logical). It also enables the system to generate context-aware recommendations, such as suggesting the insertion of a load balancer, reassigning a component to a different tier, or flagging a violation of architectural policy. Because each profile is modular, it can be reused, extended, or versioned across different environments or configurations, supporting consistency, scalability, and automation in networked system model generation, validation, and optimization.

Pseudocode 200 may represent a unified modular profile. For example, pseudocode 200 includes physical rule 202 and logical rule 204. Additionally, pseudocode 200 include hybrid rule 206, which may depend on both physical and/or logical rules. For example, pseudocode 200 represents a unified modular profile by structuring component-specific information into a format that includes distinct but interrelated rule types-physical, logical, and hybrid-used to define and evaluate the behavior and configuration of that component within a larger network or application system. In this pseudocode, physical rule 202 captures infrastructure-related requirements, such as acceptable communication ports, required network paths, or protocol usage constraints. Logical rule 204 defines the logical role or intent of the component, such as labeling it as a frontend, backend, or database, and may specify how it should relate to other components based on architectural design principles. The hybrid rule 206 bridges these two domains by enforcing conditions that depend on both physical and logical properties-for example, a rule stating that a component labeled as a "public API" (logical) must expose only HTTPS endpoints on port 443 (physical).

Pseudocode 200, in this way, functions as a unified modular profile by encapsulating all of these rules within a single, portable structure that can be interpreted by a system to evaluate component behavior, validate model conformance, and recommend changes. This unified profile not only defines how the component should behave on a technical level, but also aligns it with the overall system architecture and business intent, enabling automated reasoning, dependency mapping, and compliance checks across different stages of design and deployment.

The system may receive a first unified modular profile for a first networked system component in an architecture of networked system components in a network system, wherein the first unified modular profile comprises a first physical endpoint and a first logical endpoint for the first networked system component. For example, the system may receive a first unified modular profile for a first networked system component in a network system architecture by accessing or ingesting structured data that defines both the physical and logical attributes of that component. This profile may be retrieved from a configuration governance database (CMDB), infrastructure-as-code definitions, cloud provider metadata, or a design-time modeling tool where the component has been previously defined. The unified modular profile encapsulates all relevant information about the component in a standardized format, allowing the system to interpret it consistently. Specifically, the profile includes a first physical endpoint, as defined by physical rule 202, which may represent technical details such as an IP address, port, or communication protocol used by the component. Additionally, it includes a first logical endpoint, as described by logical rule 204, which conveys the component's logical role or intended function within the network system-such as identifying it as a backend service, data processor, or API gateway. Upon receiving the profile, the system parses these endpoints and integrates them into a larger graph-based or rule-driven architecture model, enabling it to assess connectivity, validate dependencies, enforce policy rules, and recommend improvements across the network architecture.

The system may then receive a second unified modular profile for a second networked system component in the architecture of networked system components in the network system, wherein the second unified modular profile comprises a second physical endpoint and a second logical endpoint for the second networked system component. The system may then determine a first relationship between the first networked system component and the second networked system component based on the first unified modular profile and the second unified modular profile. For example, the system may determine a first relationship between a first networked system component and a second networked system component by analyzing and comparing their respective unified modular profiles, which contain both physical and logical information. Each profile includes physical endpoints-such as IP addresses, ports, and protocols-and logical endpoints-such as roles, intended behaviors, or architectural functions. To identify a valid relationship, the system evaluates whether the physical attributes of the two components are compatible for communication or integration; for example, it may verify that the first component's output protocol and destination port align with the second component's accepted input protocol and port configuration. Simultaneously, the system checks the logical alignment of the components by assessing their defined roles and intended interactions-for instance, confirming that a frontend component (from the first profile) is permitted to communicate with a backend service (from the second profile) based on established logical rules or design patterns. If both physical and logical criteria are satisfied-such as endpoint compatibility and logically valid roles-the system infers a valid relationship between the components and represents it in the architecture model, often as a directed edge in a metamodel graph. This relationship is then used for visualization, dependency tracking, rule validation, or to power automated recommendations and system optimizations.

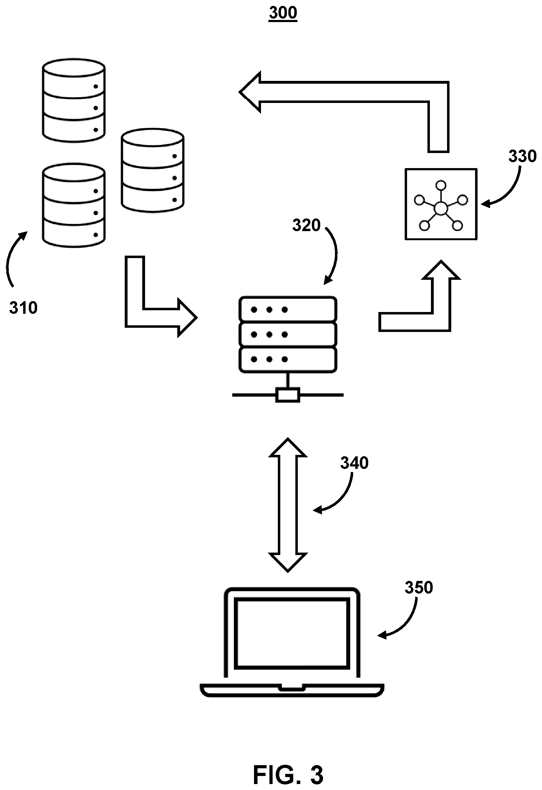

FIG. 3 shows illustrative components for a system used to manage and provision networked system components, in accordance with one or more embodiments. For example, FIG. 3 may show illustrative components for governing and provisioning networked system components. As shown in FIG. 3, system 300 may include device 310. Device 310 (as well as the other devices and components described herein) may comprise electronic storage. Electronic storage devices are systems designed to electronically store information in various formats and media. These devices may utilize non-transitory storage and/or computer-readable media to retain data and can include both system storage, which is integrally provided within servers or client devices (e.g., substantially non-removable storage), and removable storage that can be connected to servers or client devices through interfaces such as USB ports, FireWire ports, or disk drives. Electronic storage media encompass a wide range of technologies, including optically readable storage media like optical disks, magnetically readable storage media such as magnetic tapes, hard drives, and floppy disks, as well as electrical charge-based storage media like EEPROM and RAM. Solid-state storage media, such as flash drives, are another common type of electronic storage. Additionally, virtual storage resources, including cloud storage, virtual private networks (VPNs), and other virtualized systems, are considered part of electronic storage. These devices are capable of storing various forms of data, including software algorithms, information processed or determined by processors, data obtained from servers or client devices, and other essential information that supports the functionality of various processes.

In some embodiments, system 300 and/or one or more components herein may be implemented using an application specific integrated circuit. An integrated circuit may be a small electronic device made of semiconductor material, typically silicon, that contains a large number of microscopic electronic components such as transistors, resistors, capacitors, and diodes. These components are interconnected to perform a specific function or set of functions. Integrated circuits can be classified into various types based on their functionality, such as analog, digital, and mixed-signal ICs. The transistors within an IC are the primary building blocks, as they act as switches or amplifiers for electronic signals. The other components, like resistors and capacitors, are used for controlling voltage, current, and timing within the circuit. System 300 may design the integrated circuit to be application specific such that design of the circuit is customized for a given application. In some embodiments, system 300 may use an integrated circuit system where one or more integrated circuit are spread throughout a system, network, and/or one or more devices. In such case, the system design may ensure that the circuits are integrated with other electronic components like connectors, power supplies, and sensors to form a complete and functional electronic system. This integration allows for the implementation of sophisticated tasks in devices needed for one or more specified applications.

System 300 may send and/or receive data to device 320, which may generate output 330. System 300 may facilitate the transfer of data between device 310 and device 320, enabling the generation of output 330. Device 310, which functions as a storage device, holds the data that is sent to device 320, such as a CPU. A CPU, or Central Processing Unit, is the primary component of a computer responsible for executing instructions and performing computations necessary for various processes and functions. The CPU may interpret and execute instructions from programs and operating systems through a cycle of fetching, decoding, and executing commands. This cycle begins with the CPU retrieving an instruction from the system's memory, followed by decoding it to understand the required operation, and finally executing it by performing arithmetic, logical, control, or input/output tasks. The CPU relies on its internal components, including the arithmetic logic unit (ALU) for mathematical operations, the control unit (CU) for directing data flow, and registers for temporary data storage. By leveraging its clock speed and multiple cores in modern processors, the CPU can execute complex processes efficiently, enabling the functionality of applications and systems.

Device 320 processes the received data by implementing one or more applications and/or models to perform specific tasks or computations. These applications or models analyze, transform, or process the input data to produce the desired output 330. This output may represent the results of calculations, simulations, or other operations conducted by the applications or models on device 320. The system ensures seamless communication between the devices, allowing for efficient data transfer and output generation.

Output 330 may represent the result of processing data or executing instructions. In the case of a CPU, outputs can include processed data, computational results, or responses to input commands. For models, outputs often consist of predictions, classifications, decisions, or other data derived from the model's algorithms or trained parameters. Once generated, the output is typically stored in a suitable storage medium, such as system memory (RAM), a local storage device (e.g., hard drive or SSD), or a networked storage system. This stored output can then be used in various ways depending on the application. For example, it might be displayed to users as visual or textual information, serve as input for subsequent computational tasks, or be transmitted to other devices or systems for further processing. The efficient storage and utilization of outputs are essential for enabling real-time responsiveness, supporting iterative processes, and ensuring seamless integration with larger workflows or systems.

System 300 may also include terminal 350. Terminal 350 may include a user interface that may be used to interact with one or more components in system 300. As referred to herein, a "user interface" may comprise a human-computer interaction and communication in a device, and may include display screens, keyboards, a mouse, and the appearance of a desktop. For example, a user interface may comprise a way a user interacts with an application or a website. As referred to herein, "content" should be understood to mean an electronically consumable user asset, such as Internet content (e.g., streaming content, downloadable content, Webcasts, etc.), video clips, audio, content information, pictures, rotating images, documents, playlists, websites, articles, books, electronic books, blogs, advertisements, chat sessions, social media content, applications, games, and/or any other media or multimedia and/or combination of the same. Content may be recorded, played, displayed, or accessed by user devices, but can also be part of a live performance. Furthermore, user generated content may include content created and/or consumed by a user. For example, user generated content may include content created by another, but consumed and/or published by the user.

Users may interact with a system through various types of terminals in system 300 (although only a single terminal is shown for simplicity), which serve as access points for communication and control. Terminals can include traditional devices such as desktop computers, laptops, and workstations, which often feature input peripherals like keyboards and mice and output peripherals like monitors. Mobile devices, such as smartphones and tablets, provide touchscreens and voice recognition as primary interaction methods, offering portability and convenience. Specialized terminals, such as kiosks, point-of-sale (POS) systems, or industrial control panels, are designed for specific applications, often with simplified interfaces like touchscreens or dedicated buttons. Wearable devices, including smartwatches and augmented reality (AR) glasses, offer hands-free interaction via gestures, voice commands, or sensors. Users may also engage with systems through virtual assistants, using voice-based interactions, or through command-line interfaces for text-based commands. Other interaction methods include haptic feedback, biometric inputs (e.g., fingerprint or facial recognition), and adaptive technologies like eye-tracking for users with disabilities. These diverse terminals and interaction methods enable systems to cater to various use cases, environments, and user preferences.

**An** I/O (Input/Output) path refers to the communication pathway that facilitates the exchange of data between computing devices or systems. I/O path 340, for instance, may encompass a variety of communication networks such as the Internet, mobile phone networks, mobile voice or data networks like 5G or LTE, cable networks, public switched telephone networks (PSTN), or combinations of these. These networks provide the infrastructure for transmitting data across different mediums. The I/O path can also include specific communication paths, such as satellite links, fiber-optic connections, cable connections, Internet-based communication paths (e.g., IPTV), and free-space links that support wireless or broadcast signals. In addition to external communication networks, computing devices may feature internal communication paths that integrate hardware, software, and firmware components. For example, multiple computing devices can operate as part of a unified cloud-based platform, leveraging interconnected communication paths to function collectively. These I/O paths are essential for ensuring seamless data flow, supporting applications, and enabling distributed computing environments.

In some embodiments, system 300 may be a cloud system. A system structured as a cloud system is designed to provide scalable, on-demand access to computing resources and services over the Internet or other networks. In a cloud system, multiple interconnected servers, data centers, and storage devices work together to deliver virtualized computing power, storage, and applications. These resources are hosted remotely in distributed locations, creating a virtualized environment that can dynamically allocate resources based on user demands. The cloud system is typically organized into three main service models: Infrastructure as a Service (IaaS), which offers virtualized hardware and network resources; Platform as a Service (PaaS), which provides tools and frameworks for application development; and Software as a Service (SaaS), which delivers software applications to users. The system relies on communication paths, including high-speed fiber-optic networks, satellite links, and wireless connections, to enable seamless interaction between users and the cloud infrastructure. Advanced governance tools and load-balancing mechanisms ensure reliability, efficiency, and fault tolerance within the system. This structure allows users to access computing resources flexibly and cost-effectively without the need to maintain physical hardware.

In some embodiments, system 300 may use one or more APIs. An API, or Application Programming Interface, is a set of rules and protocols that allows different components within a system, such as system 300, to communicate and interact seamlessly. APIs define how software applications, services, or devices can request and exchange data, enabling interoperability between components regardless of their underlying technologies. Within a system, an API acts as a bridge between different structures, such as databases, user interfaces, or external services, facilitating the flow of information and the execution of commands.

For instance, in system 300, an API might enable device 310, a data storage component, to provide information to device 320, a processing unit. Device 320 could use the API to request specific data, execute operations, or send processed results back to another component. The API specifies the format and structure of the requests and responses, such as using JSON or XML, and enforces security protocols like authentication tokens or encryption to ensure secure communication.

**APIs** can also enable external systems to interact with system 300. For example, a financial application could use an API to query account balances, initiate transactions, or retrieve fraud detection reports generated by a model housed within the system. By standardizing interactions, APIs simplify the integration of diverse components, improve scalability, and support modular system designs, making it easier to expand or update individual parts without disrupting the entire system.

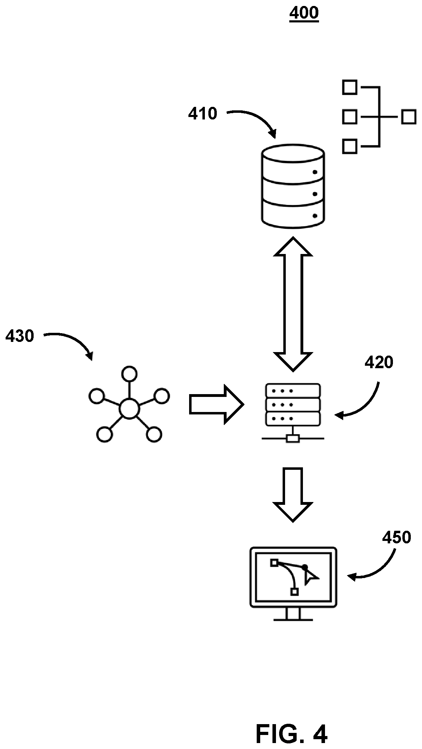

FIG. 4 shows illustrative components for a system used to manage and provision networked system components, in accordance with one or more embodiments. For example, FIG. 4 may show illustrative components for governing and provisioning networked system components. System 400 may comprise one or more artificial intelligence and/or machine learning models. Artificial intelligence (AI) and machine learning (ML) models are computational systems designed to perform tasks that typically require human intelligence, such as recognizing patterns, making predictions, and learning from data. AI models encompass a broad range of techniques, including rule-based systems, natural language processing, and deep learning, to simulate intelligent behavior. Machine learning, a subset of AI, focuses on developing algorithms that allow models to learn and improve their performance from data without being explicitly programmed. ML models are trained on large datasets to identify patterns and relationships, enabling them to make predictions, classify information, or automate decision-making processes. These models can be supervised, where they learn from labeled data; unsupervised, where they identify patterns in unlabeled data; or reinforced, where they learn through trial and error using feedback. Examples of a model may include neural networks for image recognition, decision trees for predictive analytics, and transformers for language understanding. AI and ML models are used in various fields, such as healthcare, finance, transportation, and entertainment, to drive innovation and enhance efficiency.

In should be noted that system 400 may also include non-Al models. Non-AI models are computational or mathematical models that do not rely on artificial intelligence or machine learning techniques. Instead, they use predefined rules, equations, or algorithms to simulate processes, analyze data, or solve problems based on established principles. Examples of non-AI models include statistical models, such as linear regression and logistic regression, which are used to identify relationships between variables and make predictions; deterministic models (e.g., Newtonian mechanics or circuit analysis); and rule-based systems, where a set of predefined rules governs decision-making or problem-solving.

Non-AI models may be implemented by programming the underlying rules, equations, or algorithms directly into software or hardware. For instance, statistical models are implemented using mathematical libraries or statistical software, while rule-based systems are often coded into decision-support applications. Deterministic models can be built using simulation software or computational frameworks that apply known physical laws. These models require precise inputs and often operate in scenarios where variability is minimal or well-understood. While non-AI models lack the adaptability and learning capabilities of AI models, they are often faster, more transparent, and easier to validate, making them suitable for well-defined problems with consistent parameters.

In some embodiments, system 400 may comprise a model that requires training. A model that requires training is a machine learning (ML) or artificial intelligence (AI) model that learns patterns, relationships, or rules from a dataset to make predictions, classify information, or perform specific tasks. Training such a model involves exposing it to a labeled dataset-referred to as training data-that includes input features and corresponding outputs or labels. The model uses this data to iteratively adjust its parameters to minimize errors and improve its accuracy in predicting outputs for new, unseen inputs. Training mechanisms often rely on optimization algorithms, such as gradient descent, to update the model's weights based on a loss function, which measures the difference between predicted and actual outcomes.

Training data (e.g., training data 410) may serve as the foundation for the model's learning. It typically consists of structured examples where each instance includes input variables (e.g., images, numerical data, or text) and desired outputs.

Training data 410 may be collected from various sources. For example, the system may collect training data by gathering and organizing relevant information from various sources to build a dataset that represents the problem the model is designed to solve. This process often begins with identifying the specific objectives of the model and determining the types of data required to achieve those goals. Training data can be collected from structured sources or unstructured sources. In cases where labeled data is needed, annotations or labels are added manually by human experts or automatically using tools like optical character recognition (OCR) or natural language processing (NLP) systems.

Systems may also integrate data from online repositories, APIs, or real-time inputs from user interactions. Additionally, data preprocessing techniques, such as cleaning, normalization, and augmentation, may be applied to enhance the quality, consistency, and diversity of the dataset Once collected, the training data is stored in a format that facilitates efficient access and processing during the model training phase, enabling the system to learn patterns and improve its performance.

As another example, the system may use a model to build metamodel graphs and determine physical and logical information about components by providing a structured interpretation of the data associated with each component and its relationships. The model defines the types of entities (e.g., networked system components, services, endpoints) and the rules or constraints that govern how they interact and are classified. As the system ingests data from unified modular profiles, infrastructure definitions, or runtime environments, it applies the model to map physical attributes-such as IP addresses, ports, protocols, and resource allocations-into graph nodes and edges that reflect technical connections and dependencies. At the same time, it extracts logical information-such as component roles, logical tiers, data sensitivity, or ownership-from the metadata and tags defined in the profiles or design templates. The model ensures that this information is consistently categorized and linked, allowing the system to generate a coherent metamodel graph where each node is enriched with physical and logical context. This graph can then be queried, visualized, and analyzed to support architecture validation, relationship discovery, compliance checks, and intelligent recommendations. By anchoring the interpretation of component data to a consistent model, the system can reason about the structure, behavior, and intent of the architecture in both human-understandable and machine-actionable terms.

Mechanisms used for training include supervised learning, where labeled data guides the model; unsupervised learning, where the model identifies patterns in unlabeled data; and reinforcement learning, where the model learns by receiving feedback in the form of rewards or penalties. Techniques like convolutional neural networks (CNNs) are particularly effective for analyzing image data, enabling the model to extract features like text, logos, etc. Once trained, the model can automate tasks such as fraud detection, data extraction, or account verification in financial services, improving efficiency and accuracy.

Using training data 410, system 400 may train a model housed at device 420. For example, system 400 trains a model housed at device 420 by using training data 410 as the foundational input to guide the learning process. The system begins by feeding the training data, which consists of input-output pairs or labeled examples, into the model located on device 420. The model processes these inputs and generates predictions or outputs. A loss function, designed to measure the difference between the model's predictions and the actual outputs in the training data, evaluates the accuracy of these predictions. Device 420 uses optimization algorithms, such as gradient descent, to adjust the model's parameters (e.g., weights and biases) in a way that minimizes this loss.

**The** training process may be iterative, meaning the system repeatedly passes the training data through the model, updates the parameters, and recalculates the loss until the model achieves a desirable level of accuracy or the loss reaches an acceptable threshold. Techniques such as batching (processing subsets of the data at a time) and epoch cycling (repeating the full dataset through the model multiple times) are often used to improve efficiency and learning. During training, device 420 may leverage computational accelerators like GPUs or TPUs to handle the intensive computations required for large-scale datasets or complex models.

A model housed on device 420, trained using training data 410, receives input 430 and processes it to generate output 450 through a sequence of computational steps. When input 430 is provided, it is first preprocessed, if necessary, to ensure compatibility with the model's architecture. Preprocessing may include normalization, resizing (for images), tokenization (for text), or encoding data into a structured format. Once the input is prepared, it is passed into the trained model on device 420.

The model processes the input using its learned parameters, which were optimized during the training phase using training data 410. The input flows through the model's layers, where features are extracted, transformed, and combined at various stages to derive meaningful representations. For example, in a deep learning model, convolutional layers might identify patterns like edges or shapes in images, while fully connected layers aggregate these patterns to make predictions or classifications. The final output, represented as output 450, is generated in the form of predictions, classifications, or extracted information, depending on the model's purpose. Output 450 can then be further utilized by downstream systems or presented to users, enabling efficient and automated processing of tasks.

A system uses a model to detect anomalous behavior in the financial services industry by analyzing data patterns, behaviors, and transactions to identify anomalies or indicators of fraudulent activities. The model, trained on historical data, learns to differentiate between normal and anomalous activities based on features like transaction amounts, frequency, locations, or user behavior. When the system receives new data, it processes the input through the model, which evaluates the data using the patterns it has learned. If the input deviates significantly from normal behavior or matches patterns associated with known fraud, the model flags it as suspicious. For example, in wire fraud detection, a machine learning model might analyze transaction data in real time to assess factors such as the amount spent, the transfer locations, and the user's transaction history. If the model detects an unusually large wire made in a foreign country shortly after another transaction in the user's home country, it could classify the transaction as potentially fraudulent.

Once flagged, the system can trigger automated alerts, block the transaction, or escalate the case for human review. Advanced systems may also use feedback loops to improve over time, updating the model with newly confirmed cases of fraud to enhance detection accuracy. By leveraging models to monitor and analyze large volumes of data, financial systems can enhance the process of identifying and mitigating anomalous behavior,.

In some embodiments, system 400 may use an LLM. A large language model (LLM) is a type of machine learning model designed to process and generate human-like text by understanding the context, structure, and logicals of language. These models, such as the Generative Pre-trained Transformer model (GPT), are built using deep learning architectures, typically transformers, which enable them to handle large amounts of textual data and capture complex patterns and relationships within it. LLMs are trained on extensive corpora of text data from diverse sources, including books, articles, websites, and other textual content, to learn the nuances of grammar, syntax, and meaning.

Training an LLM involves two primary phases: pretraining and fine-tuning. In the pretraining phase, the model learns general language patterns by predicting missing words or sequences in the text (e.g., next-word prediction or masked language modeling). This phase typically uses unsupervised learning and massive computational resources to adjust the model's billions of parameters. In the fine-tuning phase, the model is adapted to specific tasks or domains by training it on a smaller, task-specific dataset using supervised learning or reinforcement learning techniques. This makes the model better suited for applications such as summarization, translation, or answering domain-specific questions.

Data is input into the model as text, typically formatted into tokenized sequences that the model can process. Tokenization involves breaking the input text into smaller units, such as words, sub-words, or characters, which are converted into numerical representations understood by the model. Once the input is processed, the model uses its learned parameters to generate outputs, which could be responses, predictions, or classifications, depending on the application. Outputs are received as text, reconstructed from tokens into human-readable sentences or phrases. For example, when given a prompt about financial services, an LLM trained on financial datasets can generate detailed explanations, predictions, or suggestions relevant to that domain. Its ability to process vast amounts of data and generate coherent responses makes it a powerful tool for tasks such as customer support, content creation, and data analysis.

Inputting image data or other non-textual data into a large language model (LLM) involves preprocessing and encoding the data into a format the LLM can interpret. Since LLMs are inherently text-based, non-textual data must first be transformed into textual or numerical representations. Advanced multimodal models, designed to handle multiple types of input such as text and images, achieve this through specialized components. For instance, image encoders like CNNs or vision transformers process image data into fixed-size numerical vectors or embeddings, which are then input to the LLM. Cross-modal embeddings further align these representations in shared latent spaces, enabling seamless interaction between modalities. Models like CLIP (Contrastive Language-Image Pretraining) align image and text embeddings, allowing them to be used interchangeably in various tasks.

For models that are not inherently multimodal, non-textual data can be converted into text-like structures. For example, images can be described using image captioning models to generate textual captions, while audio data can be transcribed into text using speech-to-text algorithms. Tabular or numeric data can be structured into formats like CSV or JSON, and feature embeddings extracted from non-textual data using pretrained encoders can be directly incorporated as input.

In multimodal models, separate encoders are often used for different data types, such as image or audio encoders, which are then combined with the LLM in a shared architecture. These models undergo multimodal pretraining on datasets pairing textual and non-textual data, such as image-caption pairs. Examples include ChatGPT with vision capabilities, which uses a vision encoder to preprocess images and integrate them into the language processing pipeline, and CLIP, which aligns text and image embeddings in a shared space.

In should be noted that various algorithms and training techniques may be used to train models and/or serve applications as described herein, depending on the type of data, the problem being solved, and the architecture of the model. Example algorithms include gradient descent and its variants, such as stochastic gradient descent (SGD), which iteratively updates model parameters to minimize a loss function. Advanced versions may optimize this process by adjusting the learning rate dynamically. For classification problems, models often rely on algorithms like logistic regression, decision trees, random forests, or support vector machines (SVM). For deep learning, architectures like CNNs are used for image-related tasks, while recurrent neural networks (RNNs) and transformers are preferred for sequence-based tasks, such as natural language processing.

Training techniques vary to improve efficiency and performance. Supervised learning uses labeled data, where the model learns by comparing predictions to known outcomes, while unsupervised learning identifies hidden patterns in unlabeled data. Semi-supervised learning combines both approaches, leveraging a smaller set of labeled data with a larger set of unlabeled data. Reinforcement learning allows models to learn through trial and error by interacting with an environment and receiving feedback in the form of rewards or penalties.

Other techniques include transfer learning, where a pre-trained model is fine-tuned on new data to save training time and resources, and ensemble learning, which combines predictions from multiple models to improve accuracy. Data augmentation, such as flipping or rotating images, and regularization methods, like dropout, are used to enhance generalization and prevent overfitting. These algorithms and techniques collectively enable the training of robust and efficient models tailored to diverse applications, from image recognition to financial forecasting.

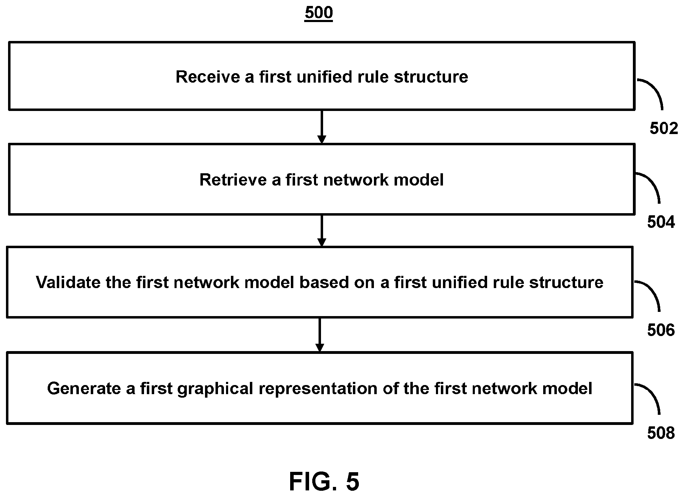

FIG. 5 shows a flowchart of the steps involved in governing and provisioning networked system components, in accordance with one or more embodiments. For example, the system may use process 500 (e.g., as implemented on one or more system components described above) in order to manage and provision networked system components based on both physical and logical properties through unified rule structures.

**At** step 502, process 500 (e.g., using one or more components described above) receives a first unified rule structure. For example, the system may receive a first unified rule structure, wherein the first unified rule structure comprises a first modular rule set for a required physical rule and a required logical rule for an architecture of networked system components in a network system. For example, the system receives a first unified rule structure by ingesting or referencing a defined configuration or policy source that outlines the architectural requirements for a network system. This unified rule structure may be supplied through a user interface, loaded from a rule repository, or imported as part of an infrastructure governance framework. The structure is organized as a first modular rule set, which includes both a required physical rule and a required logical rule, each specifying criteria that must be satisfied for a valid architecture. The physical rule might define infrastructure-level constraints such as mandatory encryption protocols, allowable port ranges, or required network segmentation, ensuring that components are technically configured for secure and efficient communication. The logical rule, on the other hand, defines logical and architectural requirements-for example, enforcing that all external-facing endpoints belong to components with the role of "API Gateway," or that data storage services must be isolated from user interface components. Once received, the system integrates this rule structure into its evaluation engine or design validation workflow, using it to assess whether the architecture of networked system components adheres to both physical and logical expectations. This allows the system to perform automated checks, identify violations, and guide users toward compliant and optimized architectural designs.

In some embodiments, the system may receive the first unified rule structure by determining a first attribute in the first unified rule structure corresponding to required physical rules and determining the required physical rule based on the first attribute. For example, the system may receive the first unified rule structure by parsing structured input-such as a configuration file, policy template, or user-defined rule set-and identifying specific attributes that correspond to required rule types. To determine a required physical rule, the system first identifies a first attribute within the unified rule structure that signals a physical constraint. This attribute might be labeled explicitly (e.g., "rule_type": "physical" or "enforce_protocol": true) or inferred from context (e.g., referencing IP addresses, ports, or connectivity constraints). Once the attribute is located, the system interprets its associated parameters-such as the expected communication protocol, required encryption standards, or network access boundaries- and formalizes this as the required physical rule. This rule is then integrated into the system's evaluation logic and used to validate networked system component configurations. For example, if the first attribute specifies that all data transmissions must occur over HTTPS, the system will create a physical rule enforcing that all relevant endpoints use port 443 with TLS enabled. Through this process of attribute identification and rule derivation, the system can dynamically construct a valid rule set from the unified rule structure, ensuring that physical requirements are clearly defined and consistently enforced across the architecture.

In some embodiments, the system may receive the first unified rule structure by determining a first keyword in the unified rule structure corresponding to required physical rules and determining the required physical rule based on the first keyword. For example, the system may receive the first unified rule structure by analyzing its content and identifying specific keywords that correspond to predefined rule types. To determine a required physical rule, the system begins by scanning the unified rule structure-often formatted as a configuration file, policy document, or data object-for a first keyword that signifies a physical requirement. This keyword may be something like "protocol", "port", "ip_range", or "network_zone", each of which is associated with infrastructure-level specifications. Once the system identifies this first keyword, it interprets its accompanying values and context to formulate the corresponding physical rule. For example, if the keyword "protocol" appears with the value "HTTPS", the system derives a rule requiring all communications to use "HTTPS", implying the need for TLS and communication over port 443. This rule is then added to the modular rule set that forms part of the unified rule structure. By using keyword detection and interpretation, the system can flexibly and automatically build out a comprehensive set of physical rules, ensuring that architecture validation and compliance enforcement are grounded in clearly defined, machine-readable policies.

At step 504, process 500 (e.g., using one or more components described above) retrieves a first networked system model. For example, the system may retrieve a first networked system model, wherein the first networked system model comprises a metamodel graph connecting the networked system components, wherein the first networked system model uses metamodel data indicating respective physical and logical endpoints for the networked system components to generate the first networked system model, and wherein the metamodel data is retrieved from respective unified modular profiles for each of the networked system components. The system may retrieve a first networked system model by aggregating and processing metamodel data that represents the structure and relationships between networked system components within a network system. This metamodel data is sourced from the respective unified modular profiles associated with each networked system component. Each profile contains both physical endpoints-such as IP addresses, ports, and protocols-and logical endpoints-such as roles, logical tiers, and intended functions. The system accesses these modular profiles from a configuration store, service registry, or metadata repository, and then parses their content to extract the relevant attributes. Using this information, the system constructs a metamodel graph, where each component is represented as a node and its physical and logical relationships to other components are represented as edges. This interconnected structure forms the first networked system model, which captures both how components are physically connected (physical) and how they are logically intended to interact (logical). The resulting networked system model allows the system to visualize architecture, perform dependency analysis, validate configurations, and make intelligent recommendations, all while maintaining alignment with the detailed component-level data stored in the unified modular profiles.

In some embodiments, the system may retrieve the first networked system model by receiving a first unified modular profile for a first networked system component in the architecture of the networked system components in the network system, wherein the first unified modular profile comprises a first physical endpoint and a first logical endpoint for the first networked system component and receiving a second unified modular profile for a second networked system component in the architecture of the networked system components in the network system, wherein the second unified modular profile comprises a second physical endpoint and a second logical endpoint for the second networked system component. For example, the system may retrieve the first networked system model by sequentially receiving unified modular profiles for each component in the network system's architecture. To begin, the system receives a first unified modular profile for a first networked system component, which includes both a first physical endpoint-such as an IP address, port, or protocol-and a first logical endpoint, which describes the component's logical role or function, such as "frontend," "database," or "API gateway." The system then receives a second unified modular profile for a second networked system component, similarly containing a second physical endpoint and a second logical endpoint. These profiles provide both the technical configuration and the architectural context needed to understand how the components are meant to operate and interact within the system. Using this data, the system maps each component as a node in a metamodel graph, establishing edges or connections based on compatibility and alignment between physical and logical endpoints. For instance, if the first component's physical endpoint is configured to send data to a port and protocol that matches the second component's physical endpoint, and the logical roles imply a valid interaction (e.g., frontend to backend), the system creates a relationship between them in the graph. By aggregating similar information across all components in the architecture, the system builds the first networked system model-a comprehensive, graph-based representation that reflects the physical connectivity and logical structure of the network system.

In some embodiments, the system may retrieve the first networked system model by determining a first relationship between a first networked system component and a second networked system component based on endpoints defined in a first unified modular profile for the first networked system component and a second unified modular profile for the second networked system component and generating a first metamodel graph of the architecture of networked system components in the network system based on the first relationship. For example, the system may retrieve the first networked system model by analyzing the endpoints defined in the unified modular profiles of the networked system components and using that information to establish relationships and build a structured representation of the architecture. Specifically, the system begins by examining the first unified modular profile for a first networked system component, which contains both physical and logical endpoints-such as IP address, port, and communication protocol (physical), as well as role, tier, or functional designation (logical). It then examines the second unified modular profile for a second networked system component, which includes similar endpoint data. The system compares these profiles to determine whether a valid first relationship exists between the two components, based on compatible physical endpoints (e.g., matching protocols and open ports) and logically valid logical roles (e.g., a frontend service connecting to a backend API). If both criteria are satisfied, the system identifies this as a valid relationship. It then uses this information to generate a first metamodel graph, representing the architecture as interconnected nodes (components) and edges (relationships). This graph-based model reflects not only the physical and technical connectivity of the components but also their intended roles and interactions within the network system. The metamodel graph becomes the foundation of the first networked system model, enabling the system to visualize, validate, and optimize the architecture based on clearly defined relationships derived from the unified modular profiles.

At step 506, process 500 (e.g., using one or more components described above) validates the first networked system model based on a first unified rule structure. For example, the system may validate the first networked system model based on a first unified rule structure. The system may validate the first networked system model by evaluating it against a first unified rule structure, which defines the architectural standards, constraints, and best practices that the networked system model must follow. The validation process begins with the system parsing the unified rule structure, which includes both physical rules-such as permitted communication protocols, port restrictions, network segmentation policies-and logical rules-such as role-based dependencies, service boundaries, or required architectural patterns. The system then analyzes the first networked system model, which is typically represented as a metamodel graph of interconnected components, each with defined physical and logical endpoints. Using this graph, the system traverses component relationships and examines whether the actual configurations and interactions align with the expectations set by the rule structure. For example, if a rule specifies that frontend services must only communicate with backend services through an API gateway, the system will look for direct frontend- to-backend connections and flag them as violations. Each validation result is categorized (e.g., pass, warning, or error), and the system may annotate the networked system model with these results for visualization. This validation process helps ensure that the architecture is compliant, secure, and aligned with design intent, while also enabling automated detection of misconfigurations or architectural drift.

In some embodiments, the system validating the first networked system model based on the first unified rule structure by determining a technical and/or infrastructure configuration for one or more networked system components in the first networked system model and comparing the technical and/or infrastructure configuration to the required physical rule. For example, the system may validate the first networked system model based on the first unified rule structure by first identifying the technical and infrastructure configuration of one or more networked system components within the model. These configurations are typically extracted from the physical endpoints defined in each component's unified modular profile and may include details such as IP addresses, port numbers, communication protocols, network zones, and firewall or routing settings. The system then compares these actual configurations to the required physical rule specified in the unified rule structure. This rule sets expectations or constraints on how components must be configured from a technical perspective-for example, requiring that all public-facing services use HTTPS on port 443, or that certain components must reside within a specific subnet or availability zone. During validation, the system systematically checks whether each component's configuration matches the requirements, flagging any discrepancies or violations. For instance, if a component exposes an unsecured HTTP endpoint when the rule mandates TLS encryption, the system records this as a failure to comply with the physical rule. This process enables the system to verify the integrity, security, and correctness of the networked system model's infrastructure layer, ensuring that all components are properly configured according to defined technical standards before deployment or further design actions are taken.

In some embodiments, the system may validate the first networked system model based on the first unified rule structure by determining a logical and/or architectural design for one or more networked system components in the first networked system model and comparing the logical and/or architectural design to the required logical rule. For example, the system validates the first networked system model based on the first unified rule structure by determining the logical and architectural design of one or more networked system components and comparing that design to the required logical rule defined in the rule structure. The logical and architectural design is derived from the logical endpoints specified in each component's unified modular profile, which may include attributes such as the component's role (e.g., frontend, backend, database), its tier within the application architecture (e.g., presentation, business logic, data), or its functional group (e.g., user services, internal APIs). The system evaluates how these components are intended to interact according to the architecture and maps their relationships using a metamodel graph. It then compares these interactions and roles to the logical rules in the unified rule structure, which establish expectations for valid architectural patterns-for example, that frontend services must not directly access databases, or that internal services must not expose public endpoints. By checking whether the actual design and logical dependencies conform to these logical rules, the system can detect violations such as inappropriate role assignments, misaligned service boundaries, or inconsistent component groupings. This validation process ensures that the networked system model adheres not just to technical specifications, but also to the intended design principles, organizational standards, and high-level architectural goals.

**In** some embodiments, the system validating the first networked system model based on the first unified rule structure by selecting a first networked system component of a plurality of networked system components in the first networked system model based on a logical and/or architectural design, identified by the required logical rule, corresponding to the first networked system component and comparing a technical and/or infrastructure configuration, identified by the required physical rule, of the first networked system component based on selecting the first networked system component. For example, the system may validate the first networked system model based on the first unified rule structure by selecting a first networked system component from among the many components in the model, using criteria defined by the logical and/or architectural design specified in the required logical rule. This selection process involves analyzing the logical attributes of each component-such as its assigned role, functional tier, or service category-within the architecture. For example, if the logical rule targets all components designated as "frontend services," the system identifies all nodes in the networked system model that match this role and selects one or more for further inspection. Once the first networked system component is selected, the system retrieves its technical and infrastructure configuration, such as its communication protocols, open ports, IP bindings, or endpoint exposure, as defined in the component's physical endpoint data. The system then compares this configuration against the required physical rule to ensure it meets the specified constraints-for instance, that a frontend component must not expose unencrypted ports or must only communicate through an API gateway. This combined validation-driven first by the logical context and followed by a check of the physical configuration-ensures that components are not only performing the right architectural role but also doing so in a technically compliant and secure manner. This layered validation approach helps maintain both logical integrity and infrastructure correctness across the entire networked system model.

**At** step 508, process 500 (e.g., using one or more components described above) generates a first graphical representation of the first networked system model. For example, the system may, in response to validating the first networked system model, generate for display, in a user interface, a first graphical representation of the first networked system model. In response to validating the first networked system model, the system may generate a first graphical representation of the model for display in a user interface by transforming the validated network data into a visual format that clearly illustrates the structure, relationships, and compliance status of the architecture. After validation, the system possesses a metamodel graph that includes all networked system components as nodes and their physical and logical relationships as edges, along with metadata such as role designations, connectivity paths, protocol types, and validation results. The system processes this data through a visualization engine that maps components to graphical elements-such as icons, shapes, or colored nodes-and draws connections to represent validated or invalidated relationships. Components may be grouped or layered based on logical tiers (e.g., frontend, backend, data), and visual indicators such as warning icons, tooltips, or colored outlines may be used to highlight compliance issues or confirmed rule conformance. The resulting graphical representation is rendered within the user interface, allowing users to interactively explore the architecture, view detailed component attributes, and understand how validation outcomes impact the overall design. This visualization helps users quickly identify architectural strengths, weaknesses, and opportunities for optimization based on the unified rule structure applied during the validation process.

**In** some embodiments, the system generates for display the first graphical representation of the first networked system model by receiving, via the user interface, a first unified structure criterion and determining a first architecture score for the networked system components based on comparing the first networked system model to the first unified structure criterion. For example, the system may generate for display a first graphical representation of the first networked system model by first receiving, via the user interface, a first unified structure criterion, which defines architectural goals or evaluation standards-such as performance, security, scalability, or compliance benchmarks. This criterion may consist of thresholds, rule sets, or design patterns that the architecture should meet. The system then compares the validated first networked system model-which includes physical and logical details of each component and their relationships-to the unified structure criterion to evaluate how closely the current architecture aligns with the desired standards. Based on this comparison, the system calculates a first architecture score, a quantitative or qualitative assessment that reflects the degree of conformance. This score may account for factors such as the number of rule violations, the severity of misconfigurations, or the completeness of role assignments. Once the score is determined, the system integrates this evaluation into a graphical representation of the networked system model for display in the user interface. The visualization may use color-coding, node annotations, overlays, or score indicators to reflect the architecture score and highlight areas of concern or excellence. This allows users to visually assess both the structure of the network and its alignment with defined architectural goals, supporting more informed decisions and iterative improvements.

In some embodiments, the system generates for display the first graphical representation of the first networked system model by receiving a first modification one or more characteristics of the networked system components, generating a second networked system model based on the first modification, and determining a second architecture score for the networked system components based on comparing the second networked system model to a first unified structure criterion. For example, the system may generate for display a first graphical representation of the first networked system model by incorporating real-time feedback from user-driven modifications and evaluating their impact on the architecture. The process begins when the system receives a first modification to one or more characteristics of the networked system components-such as changing a component's role, altering a communication path, updating endpoint configurations, or adjusting resource allocations. Based on this input, the system generates a second networked system model that reflects the updated architecture, maintaining both physical and logical relationships between components. The system then compares the second networked system model to a first unified structure criterion, which defines architectural expectations or standards, and calculates a second architecture score that reflects how well the modified model aligns with those standards. This score may differ from the original, depending on whether the modification improved or degraded architectural compliance. The system then uses this analysis to generate a graphical representation that visually presents the updated networked system model, highlighting changes, current component states, and updated scores. The interface may use color-coded indicators, icons, or overlays to distinguish modified components and emphasize how the changes affected architectural quality. This dynamic, visually- integrated feedback allows users to understand the architectural impact of their modifications in real time and guides iterative improvements based on structured criteria.

**In** some embodiments, the system generates for display the first graphical representation of the first networked system model by determining a first recommendation based on a first architecture score and a second architecture score, wherein the first architecture score is based on a first comparison of the first networked system model with a first unified structure criterion, wherein the second architecture score is based on a second comparison of a second networked system model with the first unified structure criterion and generating for display, in the user interface, the first recommendation. For example, the system may generate for display a first graphical representation of the first networked system model by determining a first recommendation based on a comparative analysis of two architecture scores: a first architecture score, which results from comparing the first networked system model to a first unified structure criterion, and a second architecture score, which results from comparing a second networked system model-reflecting a user-initiated or system-generated modification-to the same unified structure criterion. The system calculates each score by assessing how well the respective networked system model aligns with the defined architectural rules and goals, taking into account factors such as connectivity, role alignment, protocol usage, and security policies. By analyzing the difference between the first and second architecture scores, the system evaluates whether the modification had a positive, negative, or neutral effect on the overall architecture. Based on this evaluation, the system formulates a first recommendation, which may suggest keeping, refining, or discarding the modification. This recommendation is then visually integrated into the graphical representation of the networked system model and displayed in the user interface. It may be shown as an annotation, pop-up, or side panel, accompanied by visual cues such as highlighted components or score deltas to help the user understand the impact. This approach allows the system to not only visualize the architecture but also provide actionable, data-driven guidance to support informed design decisions.

**In** some embodiments, the system generates for display the first graphical representation of the first networked system model by determining a first networked system component in the network system and determining a first node in the first networked system model based on a first relationship between the first networked system component and a second networked system component. For example, the system may generate for display the first graphical representation of the first networked system model by first identifying a first networked system component within the network system-such as a compute instance, database, or API service-based on its presence and role in the architectural data. The system then analyzes the unified modular profiles or underlying configuration data to determine how this component interacts with other components in the system. Specifically, it identifies a first relationship between the first networked system component and a second networked system component, using physical and logical data such as communication protocols, dependency links, or service roles. From this relationship, the system constructs a first node in the networked system model that represents the first networked system component and connects it to another node representing the second component, establishing an edge that reflects the relationship. This node, along with others, becomes part of a metamodel graph structure that visually maps out the architecture. Once this data is modeled, the system generates a graphical representation for display in the user interface, where the nodes and their relationships are rendered as interactive visual elements. This visual representation helps users understand the structural layout and interdependencies of the networked system components, enabling easier validation, navigation, and decision-making within the architecture.

In some embodiments, the system generates for display the first graphical representation of the first networked system model by determining a first endpoint for the first networked system component based on the first unified modular profile and determining a first boundary (e.g., edge) in the first networked system model based on the first endpoint. For example, the system may generate for display the first graphical representation of the first networked system model by first analyzing the first unified modular profile associated with a first networked system component to determine a first endpoint. This endpoint includes physical and/or logical characteristics, such as an IP address and port (physical) or a logical role like "API consumer" or "database writer" (logical), that describe how the component communicates or interacts with others in the system. Using this endpoint, the system identifies a first boundary-represented as an edge in the networked system model-that signifies a relationship or communication path between the first networked system component and another component in the architecture. This edge not only captures the existence of the connection but may also encode metadata such as protocol type, security context, or directionality (e.g., source- to-target flow). The system incorporates this node-and-edge structure into a metamodel graph, which models the full architecture. The resulting data is then used to generate a graphical representation in the user interface, where components are displayed as nodes and relationships as connecting lines or arrows. The visual display allows users to see how components interact across defined boundaries and endpoints, providing clear insight into network structure, communication flow, and architectural design.

It is contemplated that the steps or descriptions of FIG. 5 may be used with any other embodiment of this disclosure. In addition, the steps and descriptions described in relation to FIG. 5 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 5.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method for governing and provisioning networked system components based on both physical and logical properties through unified rule structures.
2. The method of any one of the preceding embodiments, the method comprising: receiving a first unified rule structure, wherein the first unified rule structure comprises a first modular rule set for a required physical rule and a required logical rule for an architecture of networked system components in a network system; retrieving a first networked system model, wherein the first networked system model comprises a metamodel graph connecting the networked system components, wherein the first networked system model uses metamodel data indicating respective physical and logical endpoints for the networked system components to generate the first networked system model, and wherein the metamodel data is retrieved from respective unified modular profiles for each of the networked system components; validating the first networked system model based on a first unified rule structure; and in response to validating the first networked system model, generating for display, in a user interface, a first graphical representation of the first networked system model.
3. The method of any one of the preceding embodiments, wherein generating for display the first graphical representation of the first networked system model, further comprises: receiving, via the user interface, a first unified structure criterion; and determining a first architecture score for the networked system components based on comparing the first networked system model to the first unified structure criterion.
4. The method of any one of the preceding embodiments, wherein generating for display the first graphical representation of the first networked system model, further comprises: receiving a first modification one or more characteristics of the networked system components; generating a second networked system model based on the first modification; and determining a second architecture score for the networked system components based on comparing the second networked system model to a first unified structure criterion.
5. The method of any one of the preceding embodiments, wherein generating for display the first graphical representation of the first networked system model, further comprises: determining a first recommendation based on a first architecture score and a second architecture score, wherein the first architecture score is based on a first comparison of the first networked system model with a first unified structure criterion, wherein the second architecture score is based on a second comparison of a second networked system model with the first unified structure criterion; and generating for display, in the user interface, the first recommendation.
6. The method of any one of the preceding embodiments, wherein retrieving the first networked system model further comprises: receiving a first unified modular profile for a first networked system component in the architecture of the networked system components in the network system, wherein the first unified modular profile comprises a first physical endpoint and a first logical endpoint for the first networked system component; and receiving a second unified modular profile for a second networked system component in the architecture of the networked system components in the network system, wherein the second unified modular profile comprises a second physical endpoint and a second logical endpoint for the second networked system component.
7. The method of any one of the preceding embodiments, wherein retrieving the first networked system model further comprises: determining a first relationship between a first networked system component and a second networked system component based on endpoints defined in a first unified modular profile for the first networked system component and a second unified modular profile for the second networked system component; and generating a first metamodel graph of the architecture of networked system components in the network system based on the first relationship.
8. The method of any one of the preceding embodiments, wherein generating for display the first graphical representation of the first networked system model further comprises: determining a first networked system component in the network system; and determining a first node in the first networked system model based on a first relationship between the first networked system component and a second networked system component.
9. The method of any one of the preceding embodiments, wherein generating for display the first graphical representation of the first networked system model further comprises: determining a first endpoint for the first networked system component based on the first unified modular profile; and determining a first boundary in the first networked system model based on the first endpoint.
10. The method of any one of the preceding embodiments, wherein validating the first networked system model based on the first unified rule structure further comprises: determining a technical and/or infrastructure configuration for one or more networked system components in the first networked system model; and comparing the technical and/or infrastructure configuration to the required physical rule.
11. The method of any one of the preceding embodiments, wherein validating the first networked system model based on the first unified rule structure further comprises: determining a logical and/or architectural design for one or more networked system components in the first networked system model; and comparing the logical and/or architectural design to the required logical rule.
12. The method of any one of the preceding embodiments, wherein validating the first networked system model based on the first unified rule structure further comprises: selecting a first networked system component of a plurality of networked system components in the first networked system model based on a logical and/or architectural design, identified by the required logical rule, corresponding to the first networked system component; and comparing a technical and/or infrastructure configuration, identified by the required physical rule, of the first networked system component based on selecting the first networked system component.
13. The method of any one of the preceding embodiments, wherein receiving the first unified rule structure comprises: receiving a first data array comprising the first modular rule set; determining the required physical rule in a first data package of the first data array; and determining required logical rule in a second data package of the first data array.
14. The method of any one of the preceding embodiments, wherein receiving the first unified rule structure comprises: determining a first attribute in the first unified rule structure corresponding to required physical rules; and determining the required physical rule based on the first attribute.
15. The method of any one of the preceding embodiments wherein receiving the unified rule structure comprises: determining a first keyword in the unified rule structure corresponding to required physical rules; and determining the required physical rule based on the first keyword.
16. The method of any one of the preceding embodiments, further comprising: receiving a first unified modular profile for a first networked system component in an architecture of networked system components in a network system, wherein the first unified modular profile comprises a first physical endpoint and a first logical endpoint for the first networked system component; receiving a second unified modular profile for a second networked system component in the architecture of networked system components in the network system, wherein the second unified modular profile comprises a second physical endpoint and a second logical endpoint for the second networked system component; determining a first relationship between the first networked system component and the second networked system component based on the first unified modular profile and the second unified modular profile; generating a first metamodel graph of the architecture of networked system components in the network system based on the first relationship; and generating for display, in a user interface, first graphical representation of a first networked system model based on the first metamodel graph.
17. The method of any one of the preceding embodiments, further comprising: validating the first networked system model based on first unified rule structure; and in response to validating the first networked system model, generating for display, in the user interface, a first graphical representation of the first networked system model.
18. The method of any one of the preceding embodiments, wherein validating the first networked system model based on first unified rule structure further comprises: selecting a first networked system component of a plurality of networked system components in the first networked system model based on a logical and/or architectural design, identified by the logical endpoint, corresponding to first networked system component; and comparing a technical and/or infrastructure configuration, corresponding to the physical endpoint, of the first networked system component based on selecting the first network.
19. The method of any one of the preceding embodiments, wherein the instructions further cause operations comprising: receiving, via the user interface, a first unified structure criterion; and determining a first architecture score for the networked system components based on comparing the first networked system model to the first unified structure criterion.
20. The method of any one of the preceding embodiments, wherein generating for display the first graphical representation of the first networked system model, further comprises: determining a first recommendation based on a first architecture score and a second architecture score, wherein the first architecture score is based on a first comparison of the first networked system model with a first unified structure criterion, wherein the second architecture score is based on a second comparison of a second networked system model with the first unified structure criterion; and generating for display, in the user interface, the first recommendation.
21. The method of any one of the preceding embodiments, further comprising: retrieving an architecture model comprising declared metadata from application components, wherein the metadata specifies specifics operational, logical compliance-related, and domain specific properties; generating for display, via a user interface, a graphical representation of architecture model; retrieving a configurable rule set comprising one or more associated with architecture design standards, operational requirements, enterprise policies, or other evaluation logic; evaluating the architecture model against the rule set to compute a first architecture score; retrieving a modification to one or more properties of the architecture model; generating a revised architecture model incorporating the modification; computing a second architecture score based on the revised model; determining one or more recommendations based on a comparison of the first and second architecture scores; and generating for display the recommendations in the user interface.
22. The method of any one of the preceding embodiments, further comprising: retrieving an application architecture model comprising component-level metadata, including but not limited to protocols, design attributes, dependencies, policies, or deployment settings; validating the architecture model against a configurable rule set that defines one or more architectures evaluation criteria; and generating a graphical representation of the model for display in a user interface.
23. The method of any one of the preceding embodiments, further comprising: computing a compliance or quality score based on a comparison between the architecture model and the scoring configuration.
24. The method of any one of the preceding embodiments, further comprising: receiving a change to one or more component properties; generating an updated architecture model reflecting the change; and computing a revised score for the updated model.
25. The method of any one of the preceding embodiments, further comprising: comparing the original and revised scores; determining one or more architecture improvement suggestions based on rule deviations or score impact; and generating for display the suggestions in the user interface.
26. The method of any one of the preceding embodiments, wherein the architecture model is derived from component-declared metadata specifying at least one of: communication interface, policy adherence, logical dependencies, infrastructure posture, or runtime characteristics.
27. The method of any one of the preceding embodiments, further comprising: detecting inconsistencies or violations across declared component properties and enterprise-wide policies, including but not limited to incompatible objectives, unsupported configurations, or non-compliant settings.
28. The method of any one of the preceding embodiments, wherein the graphical representation comprises: a visual flow of data and control between components; and visual annotations indicating rule adherence, property declarations, or scoring results.
29. The method of any one of the preceding embodiments, wherein the rule set comprises modular evaluation logic that include, but is not limited to security controls, design patterns, resiliency standards, policy checks, or any domain-specific criteria.
30. The method of any one of the preceding embodiments, wherein validating the model comprises: identifying one or more declared properties for each component; and matching them against rules specifying required attributes or acceptable value ranges.
31. The method of any one of the preceding embodiments, further comprising: identifying missing or incomplete declarations; and prompting the user to complete the architecture profile prior to evaluation.
32. The method of any one of the preceding embodiments, further comprising: generating a detailed rule compliance report, including pass/fail status, rule weights, and impact on architecture score.
33. The method of any one of the preceding embodiments, further comprising: tracking changes to architecture models over time; and visualizing score progression or degradation as the model evolves.
34. The method of any one of the preceding embodiments, further comprising: expositing an API or integration point for other systems to query architecture metadata, rule results, and score metrics.
35. One or more non-transitory, computer-readable mediums storing instructions that, when executed by a data processing apparatus, cause the data process+sing apparatus to perform operations comprising those of any of embodiments 1-34.
36. A system comprising one or more processors; and memory storing instructions that, when executed by the processors, cause the processors to effectuate operations comprising those of any of embodiments 1-34.
37. A system comprising means for performing any of embodiments 1-34.

## Claims

1. A system for governing and provisioning networked system components based on both physical and logical properties through unified rule structures, the system comprising:
one or more processors; and
one or more non-transitory, computer-readable media, comprising instructions that, when executed by the one or more processors, cause operations comprising:
retrieving a first networked system model, wherein the first networked system model comprises a metamodel graph connecting the networked system components, wherein the first networked system model uses metamodel data indicating respective physical and logical endpoints for the networked system components to generate the first networked system model, and wherein the metamodel data is retrieved from respective unified modular profiles for each of the networked system components;
generating for display, in a user interface, a first graphical representation of the first networked system model;
receiving, via the user interface, a first unified structure criterion;
determining a first architecture score for the networked system components based on comparing the first networked system model to the first unified structure criterion;
receiving a first modification one or more characteristics of the networked system components;
generating a second networked system model based on the first modification;
determining a second architecture score for the networked system components based on comparing the second networked system model to the first unified structure criterion;
determining a first recommendation based on the first architecture score and the second architecture score; and
generating for display, in the user interface, the first recommendation.

2. A method for governing and provisioning system components based on both physical and logical properties through unified rule structures, the method comprising:
receiving a first unified rule structure, wherein the first unified rule structure comprises a first modular rule set for a required physical rule and a required logical rule for an architecture of networked system components in a network system;
retrieving a first networked system model, wherein the first networked system model comprises a metamodel graph connecting the networked system components, wherein the first networked system model uses metamodel data indicating respective physical and logical endpoints for the networked system components to generate the first networked system model, and wherein the metamodel data is retrieved from respective unified modular profiles for each of the networked system components;
validating the first networked system model based on a first unified rule structure; and
in response to validating the first networked system model, generating for display, in a user interface, a first graphical representation of the first networked system model.

3. The method of claim 2, wherein generating for display the first graphical representation of the first networked system model, further comprises:
receiving, via the user interface, a first unified structure criterion; and
determining a first architecture score for the networked system components based on comparing the first networked system model to the first unified structure criterion.

4. The method of claim 2, wherein generating for display the first graphical representation of the first networked system model, further comprises:
receiving a first modification one or more characteristics of the networked system components;
generating a second networked system model based on the first modification; and
determining a second architecture score for the networked system components based on comparing the second networked system model to a first unified structure criterion.

5. The method of claim 2, wherein generating for display the first graphical representation of the first networked system model, further comprises:
determining a first recommendation based on a first architecture score and a second architecture score, wherein the first architecture score is based on a first comparison of the first networked system model with a first unified structure criterion, wherein the second architecture score is based on a second comparison of a second networked system model with the first unified structure criterion; and
generating for display, in the user interface, the first recommendation.

6. The method of claim 2, wherein retrieving the first networked system model further comprises:
receiving a first unified modular profile for a first networked system component in the architecture of the networked system components in the network system, wherein the first unified modular profile comprises a first physical endpoint and a first logical endpoint for the first networked system component; and
receiving a second unified modular profile for a second networked system component in the architecture of the networked system components in the network system, wherein the second unified modular profile comprises a second physical endpoint and a second logical endpoint for the second networked system component.

7. The method of claim 2, wherein retrieving the first networked system model further comprises:
determining a first relationship between a first networked system component and a second networked system component based on endpoints defined in a first unified modular profile for the first networked system component and a second unified modular profile for the second networked system component; and
generating a first metamodel graph of the architecture of networked system components in the network system based on the first relationship.

8. The method of claim 2, wherein generating for display the first graphical representation of the first networked system model further comprises:
determining a first networked system component in the network system; and
determining a first node in the first networked system model based on a first relationship between the first networked system component and a second networked system component.

9. The method of claim 8, wherein generating for display the first graphical representation of the first networked system model further comprises:
determining a first endpoint for the first networked system component based on the first unified modular profile; and
determining a first boundary in the first networked system model based on the first endpoint.

10. The method of claim 2, wherein validating the first networked system model based on the first unified rule structure further comprises:
determining a technical and/or infrastructure configuration for one or more networked system components in the first networked system model; and
comparing the technical and/or infrastructure configuration to the required physical rule.

11. The method of claim 2, wherein validating the first networked system model based on the first unified rule structure further comprises:
determining a logical and/or architectural design for one or more networked system components in the first networked system model; and
comparing the logical and/or architectural design to the required logical rule.

12. The method of claim 2, wherein validating the first networked system model based on the first unified rule structure further comprises:
selecting a first networked system component of a plurality of networked system components in the first networked system model based on a logical and/or architectural design, identified by the required logical rule, corresponding to the first networked system component; and
comparing a technical and/or infrastructure configuration, identified by the required physical rule, of the first networked system component based on selecting the first networked system component.

13. The method of claim 2, wherein receiving the first unified rule structure comprises:
receiving a first data array comprising the first modular rule set;
determining the required physical rule in a first data package of the first data array; and
determining required logical rule in a second data package of the first data array.

14. The method of claim 2, wherein receiving the first unified rule structure comprises:
determining a first attribute in the first unified rule structure corresponding to required physical rules; and
determining the required physical rule based on the first attribute.

15. The method of claim 2, wherein receiving the unified rule structure comprises:
determining a first keyword in the unified rule structure corresponding to required physical rules; and
determining the required physical rule based on the first keyword.

16. One or more non-transitory, computer-readable media, comprising instructions that, when executed by one or more processors, cause operations comprising:
receiving a first unified modular profile for a first networked system component in an architecture of networked system components in a network system, wherein the first unified modular profile comprises a first physical endpoint and a first logical endpoint for the first networked system component;
receiving a second unified modular profile for a second networked system component in the architecture of networked system components in the network system, wherein the second unified modular profile comprises a second physical endpoint and a second logical endpoint for the second networked system component;
determining a first relationship between the first networked system component and the second networked system component based on the first unified modular profile and the second unified modular profile;
generating a first metamodel graph of the architecture of networked system components in the network system based on the first relationship; and
generating for display, in a user interface, first graphical representation of a first networked system model based on the first metamodel graph.

17. The one or more non-transitory, computer-readable media of claim 16, wherein the instructions further cause operations comprising:
validating the first networked system model based on first unified rule structure;
and
in response to validating the first networked system model, generating for display, in the user interface, a first graphical representation of the first networked system model.

18. The one or more non-transitory, computer-readable media of claim 16, wherein validating the first networked system model based on first unified rule structure further comprises:
selecting a first networked system component of a plurality of networked system components in the first networked system model based on a logical and/or architectural design, identified by the first logical endpoint, corresponding to first networked system component; and
comparing a technical and/or infrastructure configuration, corresponding to the first physical endpoint, of the first networked system component based on selecting the first network.

19. The one or more non-transitory, computer-readable media of claim 16, wherein the instructions further cause operations comprising:
receiving, via the user interface, a first unified structure criterion; and
determining a first architecture score for the networked system components based on comparing the first networked system model to the first unified structure criterion.

20. The one or more non-transitory, computer-readable media of claim 16, wherein generating for display the first graphical representation of the first networked system model, further comprises:
determining a first recommendation based on a first architecture score and a second architecture score, wherein the first architecture score is based on a first comparison of the first networked system model with a first unified structure criterion, wherein the second architecture score is based on a second comparison of a second networked system model with the first unified structure criterion; and
generating for display, in the user interface, the first recommendation.
